# EUROPÄISCHE PATENTSCHRIFT

(11) **EP 0 994 001 B1**
(45) Veröffentlichungstag und Bekanntmachung des Hinweises auf die Patenterteilung: **01.06.2005**
(21) Anmeldenummer: 99119726.0
(22) Anmeldetag: 05.10.1999
(51) Int. Cl.: B60S 1/52, B60S 1/56

(54) **Reinigungsvorrichtung**
Cleaning device
Appareil de nettoyage

(30) Priorität: 15.10.1998 DE 19847474
(43) Veröffentlichungstag der Anmeldung: 19.04.2000
(73) Patentinhaber: Siemens Aktiengesellschaft, 80333 München (DE)
(72) Erfinder: Martin, Uwe, 36199 Rotenburg (DE); Schlein, Rolf-Dieter, 36199 Rotenburg (DE); Kober, Rainer, 64297 Darmstadt (DE); Hahn, Torsten, 34576 Homberg (DE)

(56) Entgegenhaltungen:
- EP-A- 0 681 953
- DE-A- 4 329 405
- DE-C- 4 203 380
- DE-C- 19 630 421
- FR-A- 2 720 044
- GB-A- 2 267 215

## Beschreibung

Die Erfindung betrifft eine Reinigungsvorrichtung für eine Streuscheibe eines Scheinwerfers eines Kraftfahrzeuges mit einem an einer Waschflüssigkeitsleitung anzuschließenden Träger, mit zumindest einer auf dem Träger angeordneten Waschdüse und mit einer einen Elektromotor aufweisenden Stelleinrichtung zum Verfahren der Waschdüse zwischen einer Ruhestellung und einer zweiten Stellung vor der Streuscheibe.

Eine solche Reinigungsvorrichtung ist durch die DE-C-196 30 421 (EP-A- 1 028 042 und EP-A- 0 820 9 11) bekannt. Bei dieser Reinigungsvorrichtung hat der Träger ein Außengewinde, das sich im Eingriff mit einem von dem Elektromotor antreibbaren Spindelrad befindet. Ein gemeinsames Gehäuse der Stelleinrichtung und des Spindelrades dient als axiale Führung für den Träger. Die Waschflüssigkeitsleitung ist als Schlauch gestaltet und zu einer Schleife geformt, damit deren an dem Träger angeschlossenes Ende mitgeführt werden kann. Ein Vorteil dieser bekannten Reinigungsvorrichtung besteht darin, daß sich die Bewegung der Waschdüse unabhängig von einer Strömung und einem Druck in der Waschflüssigkeitsleitung durch die Stelleinrichtung steuern läßt. Hierdurch kann beispielsweise durch ein abwechselndes Reinigen der Scheinwerfer sichergestellt werden, daß jeweils nur einer der Scheinwerfer von der Waschdüse verdeckt wird.

Aus der DE-C-42 03 380 ist eine Sprüheinrichtung für Scheinwerfer-Reinigungsanlagen bekannt geworden, bei der eine Stelleinrichtung einen Düsenträger antreibt. An einem Ende des Düsenträgers ist die Waschdüse und an dem anderen Ende die Waschflüssigkeitsleitung angeschlossen.

Nachteilig bei den bekannten Reinigungsvorrichtungen ist, daß für ein knickfreies Mitführen des an dem Träger angeschlossenen Endes der Waschflüssigkeitsleitung diese zu einer sehr großen Schleife geformt werden muß. Da die Schleife zur Vermeidung eines Scheuerns zudem im Kraftfahrzeug elastisch befestigt oder geführt werden muß, führt dies zu einer kostenintensiven Gestaltung und Montage der Reinigungsvorrichtung. Weiterhin benötigt diese Schleife sehr viel Platz, der bei heutigen Kraftfahrzeugen im Bereich der Scheinwerfer meist sehr begrenzt ist.

Weiterhin ist aus der EP-A-0 681 953 A1 ein Düsenträger einer Scheibenwaschanlage bekannt geworden, bei der die Waschdüse auf einem rohrförmigen Kolben angeordnet ist. Der Kolben und damit auch die Waschdüse sind durch eine von der Waschflüssigkeit in einem Zylinder in eine Arbeitsstellung verfahrbar. Eine Feder drückt den Kolben anschließend wieder in eine zurückgezogene Ruhestellung zurück. Nachteilig hierbei ist jedoch, dass die Waschdüse nicht unabhängig von dem Druck der Waschflüssigkeit verfahren werden kann.

Man könnte daran denken, die Stelleinrichtung nach der DE-C-42 03 380 zum Verfahren des Kolbens nach der EP-A-0 681 953 A1 einzusetzen. Dies führt jedoch zu einer aufwändigen Gestaltung der Reinigungsvorrichtung, da hierbei Antriebsmittel der Stelleinrichtung an den Kolben angreifen müssten.

Der Erfindung liegt das Problem zugrunde, eine Reinigungsvorrichtung der eingangs genannten Art so weiterzuentwickeln, daß sie einen besonders geringen Raumbedarf benötigt und kostengünstig im Kraftfahrzeug montiert werden kann.

Dieses Problem wird erfindungsgemäß dadurch gelöst, daß der Träger teleskopartig ineinanderschiebbare Rohre hat, daß die Stelleinrichtung zum wahlweisen Auseinander- Einfahren der Rohre ausgebildet ist und daß die Stelleinrichtung zum Verfahren eines äußeren Rohres des Trägers ausgebildet ist.

Durch diese Gestaltung ist der an der Waschflüssigkeitsleitung angeschlossene Bereich des Trägers als feststehendes Bauteil gestaltet. Deshalb ist es nicht erforderlich, daß die Waschflüssigkeitsleitung zu einer Schleife geformt wird. Hierdurch gestaltet sich die erfindungsgemäße Reinigungsvorrichtung besonders kompakt. Da die Reinigungsvorrichtung abgesehen von dem die Waschdüse tragenden Rohr nur feststehende Bauteile aufweist, läßt sie sich besonders einfach im Kraftfahrzeug montieren. Ein weiterer Vorteil dieser Gestaltung besteht darin, daß die Waschflüssigkeitsleitung bei der Bewegung der Waschdüse nicht durch ein Scheuern an angrenzenden Bauteilen des Kraftfahrzeuges beschädigt werden kann. Die erfindungsgemäße Reinigungsvorrichtung erfordert einen besonders geringen baulichen Aufwand, weil die Stelleinrichtung zum Verfahren eines äußeren Rohres des Trägers ausgebildet ist.

Zum Verfahren der Waschdüse könnte das äußere Rohr wie bei der bekannten Reinigungsvorrichtung ein in Eingriff mit einer Spindelmutter stehendes Außengewinde aufweisen. Dies erfordert jedoch eine gerade Gestaltung der Rohre. Die Rohre können gemäß einer anderen vorteilhaften Weiterbildung der Erfindung wahlweise gerade sein oder Kreisbogenabschnitte aufweisen, wenn das äußere Rohr eine im Eingriff mit der Stelleinrichtung stehende Zahnstange hat. Da die Zahnstange nur auf der der Stelleinrichtung zugewandten Seite angeordnet sein muß, hat die erfindungsgemäße Reinigungsvorrichtung besonders geringe bauliche Abmessungen. Ein weiterer Vorteil dieser Gestaltung besteht darin, daß die Zahnstange im Vergleich zu dem Außengewinde bei einer Verschmutzung weniger störanfällig ist.

Die Waschdüse ist gemäß einer vorteilhaften Weiterbildung der Erfindung ohne zusätzlich anzuordnende Haltemittel zuverlässig in ihrer Ruhestellung oder in der zweiten Stellung gehalten, wenn die Stelleinrichtung ein Schneckengetriebe hat.

Die Waschdüse könnte beispielsweise unmittelbar auf einem der Rohre des Trägers angeordnet sein. Die erfindungsgemäße Reinigungsvorrichtung läßt sich jedoch mit geringen baulichen Veränderungen einfach für unterschiedlich gestaltete Streuscheiben und für eine vorgesehene Anordnung der Reinigungsvorrichtung vor der Streuscheibe anpassen, wenn zwischen der Waschdüse und einem der Rohre des Trägers ein Düsenstock angeordnet ist. Dieser Düsenstock kann entsprechend der zu reinigenden Streuscheibe sehr einfach zur Halterung mehrerer über- oder nebeneinander angeordneter Waschdüsen gestaltet sein und läßt sich einfach auswechseln.

Die Reinigungsvorrichtung könnte ein bei einem vorgesehenen Druck öffnendes Rückschlagventil aufweisen. Mit einem solchen Rückschlagventil läßt sich verhindern, daß bei Kurvenfahrten des Kraftfahrzeuges Waschflüssigkeit aus den Waschdüsen austritt. Eine nahe Anordnung des Rückschlagventils führt zudem zu einer sehr kurzen Reaktionszeit der Reinigungsvorrichtung. Ein solches Rückschlagventil läßt sich gemäß einer anderen vorteilhaften Weiterbildung der Erfindung einfach vermeiden, wenn der Düsenstock ein das innere Rohr in Ruhestellung der Waschdüse verschließendes Dichtelement hat. Dieses Dichtelement hat dieselbe Wirkung wie das Rückschlagventil und ist besonders nahe an der Waschdüse angeordnet.

Das Dichtelement gestaltet sich gemäß einer anderen vorteilhaften Weiterbildung der Erfindung konstruktiv besonders einfach, wenn es einen in Ruhestellung in das innere Rohr eindringenden Zapfen aufweist und wenn der Zapfen an seinem freien Ende einen Dichtring hat. Ein weiterer Vorteil dieser Gestaltung besteht darin, daß hierdurch das Dichtelement druckunabhängig ist. Ein Austreten von Waschflüssigkeit aus der Waschdüse bei blockiertem Träger wird hierdurch verhindert. Durch die Länge des Zapfens läßt sich zudem sehr einfach festlegen, ab welcher Position Waschflüssigkeit aus der Waschdüse austreten soll. Dadurch kann die Waschdüse gezielt in eine Ausgangslage verfahren werden, in der ein Austritt von Waschflüssigkeit aus der Waschdüse möglich ist.

Auf beengten Platzverhältnissen im Bereich vor der Streuscheibe läßt sich die erfindungsgemäße Reinigungsvorrichtung einfach anpassen, wenn die Stelleinrichtung mit dem äußeren Rohr über eine biegsame Welle verbunden ist. Hierdurch läßt sich der Elektromotor mit dem Getriebe an einer Stelle anordnen, an der ausreichend Platz zur Verfügung steht.

Zur weiteren Verringerung der Abmessungen und der Fertigungskosten der erfindungsgemäßen Reinigungsvorrichtung trägt es bei, wenn ein Gehäuse der Stelleinrichtung und eine Führungshülse einteilig gestaltet sind. Weiterhin läßt sich die erfindungsgemäße Reinigungsvorrichtung sehr einfach außerhalb des Kraftfahrzeuges vormontieren und testen.

Der Anschluß der erfindungsgemäßen Reinigungsvorrichtung an eine im Kraftfahrzeug bereits verlegte Waschflüssigkeitsleitung gestaltet sich besonders einfach, wenn die Führungshülse topfförmig gestaltet ist und im Bodenbereich einen mit dem inneren Rohr verbundenen Anschlußstutzen für die Waschflüssigkeitsleitung hat. Weiterhin hat hierdurch der den Anschlußstutzen tragende Bereich der erfindungsgemäßen Reinigungsvorrichtung eine besonders hohe Stabilität.

Zur weiteren Vereinfachung der Montage der erfindungsgemäßen Reinigungsvorrichtung trägt es bei, wenn der Bodenbereich der Führungshülse einteilig mit dem Anschlußstutzen und dem inneren Rohr gefertigt ist und wenn die Führungshülse und der Bodenbereich mittels einer Rastverbindung verbunden sind.

Die Erfindung läßt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: eine erfindungsgemäße, vor einer Streuscheibe montierte Reinigungsvorrichtung in einer Grundstellung,
- Fig.2: die Reinigungsvorrichtung aus Figur 1 in einem Längsschnitt,
- Fig.3: die Reinigungsvorrichtung aus Figur 1 in einer ausgefahrenen Stellung der Waschdüse.

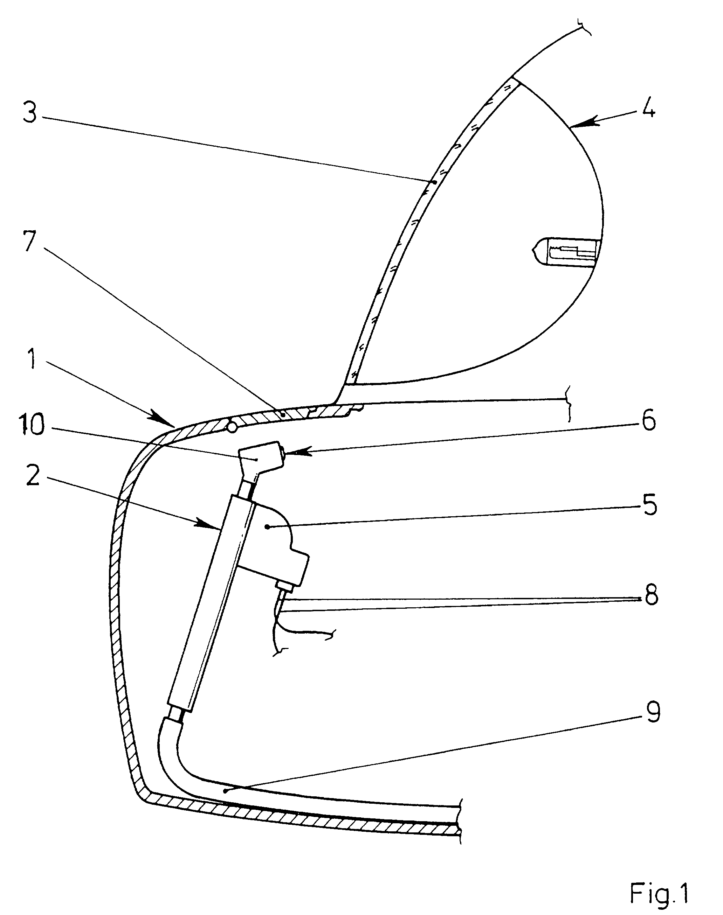

Die Figur 1 zeigt eine erfindungsgemäße, in einem vorderen Stoßfänger 1 eines Kraftfahrzeuges montierte Reinigungsvorrichtung 2. Oberhalb des Stoßfängers 1 ist eine Streuscheibe 3 eines Scheinwerfers 4 angeordnet. Die Reinigungsvorrichtung 2 hat eine von einer Stelleinrichtung 5 verfahrbare Waschdüse 6. Die Waschdüse 6 befindet sich hier in einer Ruhestellung unterhalb einer Klappe 7 des Stoßfängers 1. An der Stelleinrichtung 5 sind elektrische Leitungen 8 für die Stelleinrichtung 5 und eine Waschflüssigkeitsleitung 9 angeschlossen. Die Waschdüse 6 wird von einer nicht dargestellten Pumpe mit Waschflüssigkeit versorgt.

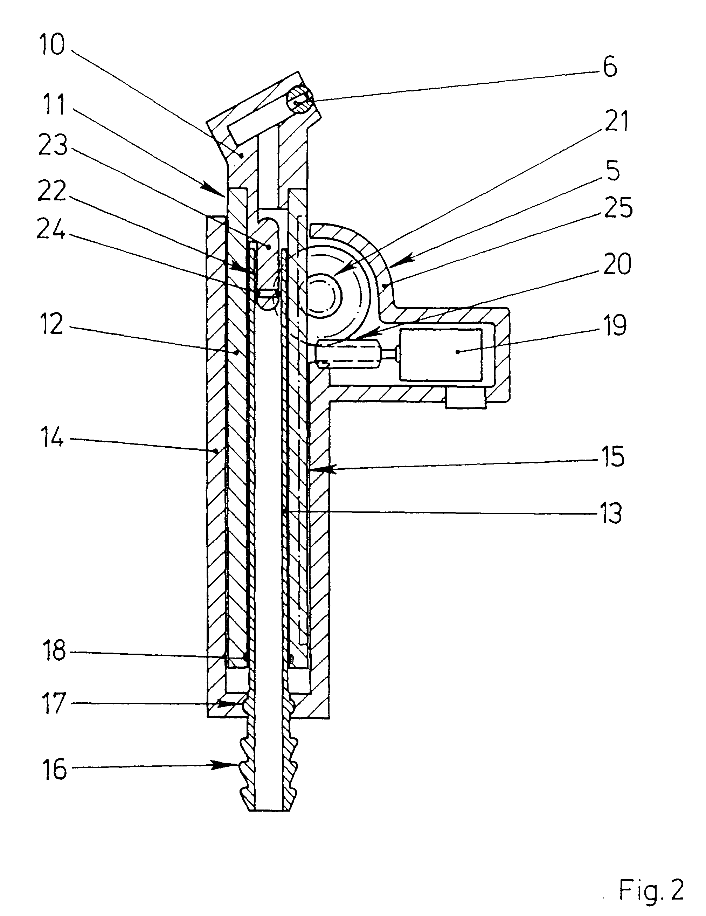

Die Figur 2 zeigt die Reinigungsvorrichtung 2 aus Figur 1 in einem Längsschnitt. Die Waschdüse 6 ist auf einem Düsenstock 10 angeordnet, der seinerseits auf einem Träger 11 befestigt ist. Der Träger 11 hat zwei teleskopartig ineinanderschiebbare Rohre 12, 13. Das äußere Rohr 12 ist innerhalb einer Führungshülse 14 angeordnet und hat auf seiner der Stelleinrichtung 5 zugewandten Seite eine Zahnstange 15. Das innere Rohr 13 hat einen Anschlußstutzen 16 für die in Figur 1 dargestellte Waschflüssigkeitsleitung 9 und durchdringt die Führungshülse 14 in einem Bodenbereich. An dieser Stelle hat das innere Rohr eine Rastverbindung 17 mit der Führungshülse 14. Das innere Rohr 13 ist im Bereich der Rastverbindung 17 gegenüber der Führungshülse 14 abgedichtet. Das äußere Rohr 12 hat einen gegen das Rohr 13 vorgespannten Dichtring 18. Die Stelleinrichtung 5 hat einen Elektromotor 19, der über ein Schneckengetriebe 20 mit einem Untersetzungsgetriebe 21 verbunden ist. Das Untersetzungsgetriebe 21 steht im Eingriff mit der Zahnstange 15 des äußeren Rohres 12. Hierdurch läßt sich das äußere Rohr 12 zusammen mit der Waschdüse 6 verfahren. Der Elektromotor 19 ist senkrecht zu der Zahnstange 15 des äußeren Rohres 12 angeordnet. Der Elektromotor 19 läßt sich bei entsprechenden Platzverhältnissen vor der in Figur 1 dargestellten Streuscheibe 3 auch parallel zu der Zahnstange 15 anordnen oder über eine nicht dargestellte biegsame Welle mit dem Schneckengetriebe 20 oder unmittelbar mit dem Untersetzungsgetriebe 21 verbinden. Die Führungshülse 14 und ein Gehäuse 25 der Stelleinrichtung 5 sind einteilig gestaltet.

Der Düsenstock 10 hat ein das innere Rohr 13 in der eingezeichneten Stellung verschließendes Dichtelement 22. Das Dichtelement 22 weist einen in das innere Rohr 13 eindringenden Zapfen 23 mit einem Dichtring 24 auf. Hierdurch kann nur dann Waschflüssigkeit zu der Waschdüse 6 gelangen, wenn das äußere Rohr 12 soweit ausgefahren ist, daß sich der Dichtring 24 außerhalb des inneren Rohres 13 befindet. Bei einem Klemmen des Trägers 11 in der eingezeichneten Ruhestellung der Waschdüse 6 kann damit keine Waschflüssigkeit in den in Figur 1 dargestellten Stoßfänger 1 gespritzt werden. Durch die Länge des Zapfens 23 läßt sich damit festlegen, ab welcher Position der Waschdüse 6 vor der in Figur 1 dargestellten Streuscheibe 3 Waschflüssigkeit aus der Waschdüse 6 austreten kann.

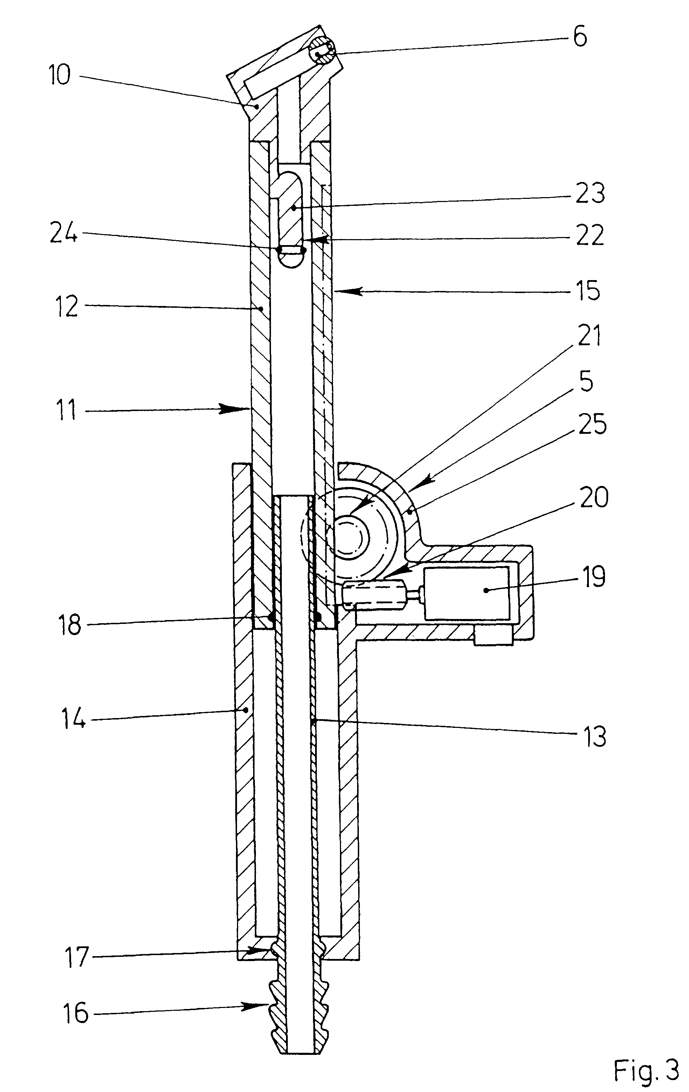

Die Figur 3 zeigt die erfindungsgemäße Reinigungsvorrichtung 2 aus Figur 1 in einer ausgefahrenen Endstellung. Der auf dem Zapfen 23 angeordnete Dichtring 24 befindet sich außerhalb des inneren Rohres 13, so daß Waschflüssigkeit von dem Anschlußstutzen 16 bis zu der Waschdüse 6 gelangen kann.

## Patentansprüche

1. Reinigungsvorrichtung für eine Streuscheibe (3) eines Scheinwerfers (4) eines Kraftfahrzeuges mit einem an einer Waschflüssigkeitsleitung anzuschließenden rohrförmigen Träger (11), mit zumindest einer auf dem Träger (11) angeordneten Waschdüse (6) und mit einer einen Elektromotor aufweisenden Stelleinrichtung (5) zum Verfahren der Waschdüse (6) zwischen einer Ruhestellung und einer zweiten Stellung vor der Streuscheibe, **dadurch gekennzeichnet, daß** der Träger (11) teleskopartig ineinanderschiebbare Rohre (12, 13) hat, daß die Stelleinrichtung (5) zum wahlweisen Auseinanderund Einfahren der Rohre (12, 13) ausgebildet ist und daß die Stelleinrichtung (5) zum Verfahren eines äußeren Rohres (12) des Trägers (11) ausgebildet ist.

2. Reinigungsvorrichtung nach Anspruch 1, **dadurch gekennzeichnet, daß** das äußere Rohr (12) eine im Eingriff mit der Stelleinrichtung (5) stehende Zahnstange (15) hat.

3. Reinigungsvorrichtung nach Anspruch 1 oder 2, **dadurch gekennzeichnet, daß** die Stelleinrichtung (5) ein Schneckengetriebe (20) hat.

4. Reinigungsvorrichtung nach zumindest einem der vorhergehenden Ansprüche, **dadurch gekennzeichnet, daß** zwischen der Waschdüse (6) und einem der Rohre (12) des Trägers (11) ein Düsenstock (10) angeordnet ist.

5. Reinigungsvorrichtung nach zumindest einem der vorhergehenden Ansprüche, **dadurch gekennzeichnet, daß** der Düsenstock (10) ein das innere Rohr (13) in Ruhestellung der Waschdüse (6) verschließendes Dichtelement (22) hat.

6. Reinigungsvorrichtung nach zumindest einem der vorhergehenden Ansprüche, **dadurch gekennzeichnet, daß** das Dichtelement (22) einen in Ruhestellung in das innere Rohr (13) eindringenden Zapfen (23) aufweist und daß der Zapfen (23) an seinem freien Ende einen Dichtring (24) hat.

7. Reinigungsvorrichtung nach zumindest einem der vorhergehenden Ansprüche, **dadurch gekennzeichnet, daß** die Stelleinrichtung (5) mit dem äußeren Rohr (12) über eine biegsame Welle verbunden ist.

8. Reinigungsvorrichtung nach zumindest einem der vorhergehenden Ansprüche, **dadurch gekennzeichnet, daß** ein Gehäuse (25) der Stelleinrichtung (5) und eine Führungshülse (14) einteilig gestaltet sind.

9. Reinigungsvorrichtung nach zumindest einem der vorhergehenden Ansprüche, **dadurch gekennzeichnet, daß** die Führungshülse (14) topfförmig gestaltet ist und im Bodenbereich einen mit dem inneren Rohr (13) verbundenen Anschlußstutzen (16) für die Waschflüssigkeitsleitung (9) hat.

10. Reinigungsvorrichtung nach zumindest einem der vorhergehenden Ansprüche, **dadurch gekennzeichnet, daß** der Bodenbereich der Führungshülse (14) einteilig mit dem Anschlußstutzen (16) und dem inneren Rohr (12) gefertigt ist und daß die Führungshülse (14) und der Bodenbereich mittels einer Rastverbindung (17) verbunden sind.

## Claims

1. Cleaning device for a motor vehicle headlight (4) lens (3), having a tubular support (11) which is to be connected to a washer fluid line, having at least one washer nozzle (6) which is arranged on the support (11), and having an adjusting arrangement (5) which has an electric motor and is intended for moving the washer nozzle (6) between an inoperative position and a second position in front of the lens, **characterized in that** the support (11) has tubes (12, 13) which can be pushed one into another in the manner of a telescope, **in that** the adjusting arrangement (5) is designed for moving the tubes (12, 13) apart and retracting them as desired, and **in that** the adjusting arrangement (5) is designed for moving an outer tube (12) of the support (11).

2. Cleaning device according to Claim 1, **characterized in that** the outer tube (12) has a toothed rack (15) which is in engagement with the adjusting arrangement (5).

3. Cleaning device according to Claim 1 or 2, **characterized in that** the adjusting arrangement (5) has a worm gearing (20).

4. Cleaning device according to at least one of the preceding claims, **characterized in that** a nozzle holder (10) is arranged between the washer nozzle (6) and one of the tubes (12) of the support (11).

5. Cleaning device according to at least one of the preceding claims, **characterized in that** the nozzle holder (10) has a sealing element (22) which closes the inner tube (13) in the inoperative position of the washer nozzle (6).

6. Cleaning device according to at least one of the preceding claims, **characterized in that** the sealing element (22) has a peg (23) which penetrates into the inner tube (13) in the inoperative position, and **in that** the peg (23) has a sealing ring (24) on its free end.

7. Cleaning device according to at least one of the preceding claims, **characterized in that** the adjusting arrangement (5) is connected to the outer tube (12) via a flexible shaft.

8. Cleaning device according to at least one of the preceding claims, **characterized in that** a housing (25) of the adjusting arrangement (5) and a guide sleeve (14) are configured in one piece.

9. Cleaning device according to at least one of the preceding claims, **characterized in that** the guide sleeve (14) is configured in the form of a cup and in the bottom region has a connecting branch (16) which is connected to the inner tube (13) and is intended for the washer fluid line (9).

10. Cleaning device according to at least one of the preceding claims, **characterized in that** the bottom region of the guide sleeve (14) is manufactured in one piece with the connecting branch (16) and the inner tube (12), and **in that** the guide sleeve (14) and the bottom region are connected by means of a latching connection (17).

## Revendications

1. Dispositif de nettoyage pour diffuseur (3) de phare (4) d'un véhicule automobile, comportant un support (11) en forme de tube à raccorder à une conduite de liquide de nettoyage, au moins un gicleur de nettoyage (6) monté sur le support (11) et u n dispositif de réglage (5) comportant un moteur électrique destiné à déplacer le gicleur de nettoyage (6) entre une position de repos et une deuxième position devant le diffuseur, **caractérisé par le fait que** le support (11) a des tubes (12, 13) glissant l'un dans l'autre d'une façon télescopique, que le dispositif de réglage (5) est conçu pour, au choix, sortir et escamoter les tubes (12, 13) et que le dispositif de réglage (5) est conçu pour faire sortir un tube extérieur (12) du support (11).

2. Dispositif de nettoyage selon la revendication 1 **caractérisé par le fait que** le tube extérieur (12) a une crémaillère qui est en prise avec le dispositif de réglage (5).

3. Dispositif de nettoyage selon la revendication 1 ou 2 **caractérisé par le fait que** le dispositif de réglage (5) a un engrenage à vis sans fin (20).

4. Dispositif de nettoyage selon au moins l'une des revendications précédentes **caractérisé par le fait qu'**un porte-gicleur (10) est disposé entre le gicleur de nettoyage (6) et l'un des tubes (12) du support (11 ).

5. Dispositif de nettoyage selon au moins l'une des revendications précédentes **caractérisé par le fait que** le porte-gicleur (10) a un élément d'étanchéité (22) fermant le tube intérieur (13) dans la position de repos du gicleur de nettoyage (6).

6. Dispositif de nettoyage selon au moins l'une des revendications précédentes **caractérisé par le fait que** l'élément d'étanchéité (22) comporte un tourillon (23) s'introduisant, en position de repos, dans le tube intérieur (13) et que le tourillon (23) a une bague d'étanchéité (24) à son extrémité libre.

7. Dispositif de nettoyage selon au moins l'une des revendications précédentes **caractérisé par le fait que** le dispositif de réglage (5) est relié au tube extérieur (12) par l'intermédiaire d'un arbre flexible.

8. Dispositif de nettoyage selon au moins l'une des revendications précédentes **caractérisé par le fait qu'**un boîtier (25) du dispositif de réglage ( 5) et une douille de guidage (14) sont conçus en une seule pièce.

9. Dispositif de nettoyage selon au moins l'une des revendications précédentes **caractérisé par le fait que** la douille de guidage (14) est conçue en forme de pot et a, dans la zone du fond, un manchon de raccordement (16) pour la conduite de liquide de nettoyage (9), qui est lié au tube intérieur (13).

10. Dispositif de nettoyage selon au moins l'une des revendications précédentes **caractérisé par le fait que** la zone du fond de la douille de guidage (14) est fabriquée en une seule pièce avec le manchon de raccordement (16) et avec le tube intérieur (12) et que la douille de guidage (14) et la zone du fond sont liées au moyen d'une liaison encliquetée (17).
